# EUROPÄISCHE PATENTSCHRIFT

(11) **EP 0 870 126 B1**
(45) Veröffentlichungstag und Bekanntmachung des Hinweises auf die Patenterteilung: **23.06.1999**
(21) Anmeldenummer: 97901585.6
(22) Anmeldetag: 22.01.1997
(51) Int. Cl.: F16H 1/28

(54) **PLANETENGETRIEBE**
PLANETARY GEAR
ENGRENAGE PLANETAIRE

(30) Priorität: 27.01.1996 DE 19603004
(43) Veröffentlichungstag der Anmeldung: 14.10.1998
(73) Patentinhaber: ZF FRIEDRICHSHAFEN Aktiengesellschaft, 88038 Friedrichshafen (DE)
(72) Erfinder: SCHULZ, Horst, D-88045 Friedrichshafen (DE)
(74) Vertreter: Zietlow, Karl-Peter
(86) Internationale Anmeldenummer: EP9700288
(87) Internationale Veröffentlichungsnummer: WO9727410

(56) Entgegenhaltungen:
- DE-A- 2 625 429
- DE-A- 19 525 831
- FR-A- 620 670
- GB-A- 1 551 325

## Beschreibung

Die Erfindung betrifft ein Planetengetriebe nach der im Oberbegriff von Anspruch 1 näher definierten Art.

Planetengetriebe dieser Art sind allgemein bekannt. Dabei haben die Planetenräder jeweils zwei Verzahnungen zum ständigen Zahneingriff mit den beiden Hohlrädern. Sie bilden damit ein sogenanntes Wolfrom-Koppelgetriebe. Das Drehzahlverhältnis des Planetenträgers zu dem für den Abtrieb vorgesehenen Hohlrad wird dabei als Wolfrom-Übersetzung bezeichnet. Bei den bekannten Planetengetrieben greift das zentrale Sonnenrad direkt in die Planetenräder ein und bildet mit den Planetenrädern und dem feststehenden Hohlrad der beiden Hohlräder eine Vorübersetzung. Die Wolfrom-Übersetzung multipliziert mit der Vorübersetzung ergibt damit die Gesamtübersetzung.

Viele Aufgaben für ein derartiges Planetengetriebe, insbesondere in der Robotertechnik, benötigen hohe Übersetzungen mit z. B. i = 170 oder noch höher. Häufig ist es dabei jedoch wünschenswert, daß das zentrale Sonnenrad nicht zu klein im Durchmesser ist, da es z. B. mit einer Hohlwelle versehen sein soll, und zwar zur Aufnahme eines Wellenendes eines Motors oder zur Durchführung von Roboterteilen. Darüber hinaus ist es oft wünschenswert, die Wolfrom-Übersetzung zu begrenzen. Nachteilig dabei ist jedoch, daß dies nur über eine Begrenzung der Drehzahlen des Planetenträgers zum maßvollen Werten bezüglich Zahnwälzleistungen, Geräusch, Wirkungsgrad, Erwärmung und Massenträgheit führt. Auf der anderen Seite wird es mit einer begrenzten Wolfrom-Übersetzung aber auch schwierig, hohe Gesamtübersetzungen zu erreichen.

Da bei den bisher bekannten Ausführungen eines Planetengetriebes das antreibende zentrale Sonnenrad mit den Planetenrädern direkt in Eingriff steht, muß es im Modul und den übrigen Verzahnungsdaten mit diesen gleich sein.

Bei den bekannten Lösungen bringt die Realisierung von höheren Übersetzungen neben den vorstehend genannten Nachteilen auch den weiteren Nachteil, daß bei Planetenradzahlen von maximal drei eine niedrige Momentendichte vorhanden ist und Probleme bezüglich der Gleichförmigkeit des Abtriebmomentes entstehen können. Die für ausreichend hohe Gesamtübersetzung erforderliche kleine Zähnezahl des Sonnenrades ergibt außerdem neben den Problemen beim Verbinden mit den Teilen der Roboterumgebung den weiteren Nachteil bezüglich der Zahnformen, wie z. B. Unterschnitt und/oder spitze Zahnköpfe. Nachteilig ist weiterhin die hierfür erforderliche relativ hohe Zähnezahl an den Hohlrädern mit einem relativ kleinen Modul und daraus resultierenden Nachteilen für die Momentendichte.

Der vorliegenden Erfindung liegt daher die Aufgabe zugrunde, hohe Übersetzungen bei einer guten Bauraumausnutzung (Momentendichte) zu erreichen, wobei jedoch die vorstehend genannten Nachteile soweit wie möglich beseitigt oder wenigstens deutlich verringert werden sollen. Zusätzlich soll die Übertragungsqualität gesteigert werden, d. h. insbesondere Vibrationen und Winkelübertragungsfehler sollen minimiert werden. Darüber hinaus soll das Planetengetriebe günstig in der Herstellung sein und keinen hohen Montageaufwand erfordern.

Erfindungsgemäß wird diese Aufgabe durch die im kennzeichnenden Teil von Anspruch 1 genannten Merkmale gelöst.

Durch die erfindungsgemäße Ausgestaltung des Planetengetriebes werden hohe Vorübersetzungen möglich, wodurch trotz hoher Gesamtübersetzung eine maßvolle Wolfrom-Übersetzung gewählt werden kann. Weiterhin bleiben die internen Zahnwälzleistungen, das Geräusch, der Wirkungsgrad, die Erwärmung und die Massenträgheit in vorteilhaften Grenzen. Dies bedeutet, daß damit sehr gute Voraussetzungen für eine lang andauernde Konstanz des Getriebespiels gegeben ist. Infolge der maßvollen Wolfrom-Übersetzung ist es auch möglich, im Bedarfsfalle 4,6 oder jeweils paarweise noch mehr Planetenräder einzusetzen. Eine maßvolle bzw. kleinere Wolfrom-Übersetzung bedeutet in der Regel auch größer wählbare Zähnezahldifferenzen der beiden Hohlräder. Die Anzahl der Planetenräder steht aufgrund von Montagebedingungen meist in einem direkten Zusammenhang mit der Zähnezahldifferenz der beiden Hohlräder.

Eine höhere Planetenräderzahl ergibt weiterhin eine gute Momentdichte. Die Unterbringung der Zwischenwellen in dem Planetenträger kann praktisch ohne einen zusätzlichen ^Raumbedarf erfolgen. Von Vorteil ist weiterhin, daß das zentrale Sonnenrad je nach gewünschter Gesamtübersetzung auch als Hohlwelle ausgebildet werden kann, da der Verzahnungsdurchmesser des Sonnenrades in jedem Fall erheblich größer sein kann als bei den bekannten Lösungen.

Von Vorteil ist weiterhin, daß der Modul der Eingangsstufe, nämlich Sonnenrad/zweite Verzahnung der Zwischenwelle anders, insbesondere feiner, gewählt werden kann als in einem bekannten Wolfrom-Satz, so daß kleine Zähnezahlen und die damit zusammenhängenden Probleme bezüglich der Zahnform, wie z. B. Unterschnitt und/oder spitze Zähne, nicht vorkommen.

Darüber hinaus ergibt sich ein Kostenvorteil dadurch, daß eine ganze Übersetzungsreihe mit immer gleich ausgebildetem Wolfrom-Satz gebildet werden kann, indem lediglich die Übersetzung der Eingangsstufe variiert werden muß.

Aufgrund der maßvollen Wolfrom-Übersetzung laufen alle mit hohen Momenten belasteten Getriebeteile, die jedoch einen großen Anteil am Gesamtgewicht haben, langsamer und erzeugen damit kleinere Massenträgheitswirkungen. Die schnelldrehenden Getriebeteile sind hingegen mit relativ geringen Kräften belastet und können relativ massearm gestaltet werden.

Durch die erfindungsgemäße vorteilhafte Ausgestaltung gemäß Anspruch 2 ergeben sich weitgehend ausgewogene Verzahnungskräfte an den ersten, kleineren Verzahnungen der Zwischenwellen, wodurch deren Lagerung leichter und einfacher wird. Der genaue Winkelwert für die Anordnung der Zwischenwellen kann in Abhängigkeit von den Montagebedingungen unter Berücksichtigung der Zähnezahlkombination und der Planetenradanzahl gewählt werden.

Durch die Merkmale gemäß Anspruch 3 wird eine günstige räumliche Anordnung erreicht, die eine problemlose Unterbringung der zweiten, größeren Verzahnungen der Zwischenwellen gewährleistet, was insbesondere bei hohen Übersetzungen von Vorteil ist.

Die in Anspruch 4 vorgeschlagenen Maßnahmen ermöglichen größere Wirklinienabstände zwischen den beiden Verzahnungen der Zwischenwellen, was deren Lagerung erleichtert.

Durch die Merkmale gemäß Anspruch 5 wird die Montage deutlich vereinfacht. So können beide Verzahnungen der Zwischenwellen außerhalb des Planetenträgers zahnstellungsgenau vormontiert bzw. vorgefertigt werden.

Durch die in Anspruch 6 genannten Maßnahmen können an den Zwischenwellen bzw. dem zentralen Sonnenrad jeweils nur ein radial führendes Wälzlager und dieses dann axial entfernt von den jeweiligen Zahneingriffen angeordnet werden. Auf diese Weise kann die normalerweise in geringem Maße stets vorhandene Winkelbeweglichkeit des betreffenden Wälzlagers ausgenutzt werden. Die Verzahnung ist damit selbsteinstellend bzw. selbstzentrierend. Die Selbstzentrierung in den Zahneingriffen bewirkt eine gleichmäßige Lastverteilung zwischen den Planetenrädern. Dieser Lastausgleich zwischen den Planetenrädern wirkt außerdem als interner Ausgleich von fertigungsbedingten Teilungsfehlern der Verzahnungen, so daß diese nur in geringerem Maße auf die Ausgangswelle einwirken. Dies hat den Vorteil eines präziseren Laufes mit geringer Vibration.

Durch die in Anspruch 7 genannte Verstärkung können lokale Steifigkeitsminderungen des Planetenträgers aufgrund der zusätzlichen Lagerbohrungen für die Zwischenwellen vermieden werden.

Durch die in den Merkmalen 8 genannten Maßnahmen wird eine einfache Montage unter Gewährleistung der Zahnstellungserfordernisse erreicht.

Die konische Ausbildung gemäß Anspruch 9 ergibt eine Spieleinstellbarkeit des Getriebes durch die Möglichkeit eines axialen Einstellens der Verzahnungsteile.

Die in Anspruch 10 genannte schräge Verzahnung ergibt einen präzisen, geräuscharmen Lauf mit geringer Vibration.

Die Axiallagerung der Planetenräder kann relativ einfach gestaltet werden, wenn die Merkmale gemäß Anspruch 11 vorgesehen werden. Durch diese Ausgestaltung werden nämlich die Achsschübe weitgehend kompensiert.

Ähnliches gilt für die Merkmale von Anspruch 12. Durch diese Ausgestaltung kann die Lagerung der Zwischenwellen infolge gut ausgeglichener Kräfte vereinfacht werden, da nämlich die Achsschübe deutlich verringert sind.

Durch die in Anspruch 13 genannten Merkmale wird eine Unempfindlichkeit der Zahneingriffe der Eingangsstufe, nämlich Sonnenrad/zweite Verzahnung der Zwischenwellen gegenüber axialen Verschiebewegen, gegenüber dem Sonnenrad erreicht.

Durch die Merkmale von Anspruch 14 werden die Auswirkungen des Zahnflankenspiels in der Eingangsstufe auf das Gesamtspiel gering, weil mit den erfindungsgemäßen Merkmalen das zentrale Sonnenrad relativ groß ausgelegt werden kann. Zusätzlich kann bei einer Selbstzentrierung des Sonnenrades in den Zahneingriffen das Zahnflankenspiel enger gewählt werden, da sich Abstandsfehler geringer auswirken. Diese Maßnahme reduziert auch die Anzahl erforderlicher, konischer Verzahnungen, sowie die Anzahl von einzustellenden Getriebeteilen.

In vorteilhafter Weise werden durch die in Anspruch 15 genannten Merkmale die Wolfrom-Übersetzung und damit die internen Zahnwälzleistungen, das Geräusch, die Reibmomente, die Erwärmung und das Massenträgheitsmoment wirksam reduziert. Dies wird durch die aufgrund der Zwischenwellen erreichbare hohe Vorübersetzung möglich, womit in vorteilhafter Weise im Gegenzug die Wolfrom-Übersetzung reduziert werden kann.

Eine einfachere Fertigung der Planetenräder wird durch die in Anspruch 16 genannten Merkmale erreicht. Diese Maßnahme ist deshalb vorteilhaft, weil die Planetenräder mindestens vierfach in dem Planetengetriebe vorhanden sind.

Ein kinematisch exaktes Eingreifen der ersten Verzahnungen der Zwischenwellen mit den Planetenrädern wird durch die in Anspruch 17 genannte geneigte Drehachse erreicht.

Eine vorteilhafte Anwendung des Erfindungsgedankens an einem Getriebe, bei dem die kinematischen Werte der Zahneingriffe an beiden Hohlrädern unabhängig voneinander optimiert werden können, wird durch die in Anspruch 18 genannte Maßnahme erreicht. Dabei wird man im allgemeinen eine deutliche Abstufung vorsehen.

Einfache Montagebedingungen werden durch die in Anspruch 19 genannten Merkmale geschaffen.

Eine vorteilhafte Anwendung des Erfindungsgedankens an einem Getriebe ist in Anspruch 20 genannt, wobei die kinematischen Werte der Zahneingriffe an beiden Hohlrädern unabhängig voneinander optimiert werden können. Gleichzeitig können dabei der Aufwand an Spieleinstellscheiben wie auch die Anzahl der Lager reduziert werden. Eine Kostensenkung ergibt sich darüber hinaus durch eine einfache Fertigung des Planetenträgers durch die Vermeidung von geneigten Achsen. Dabei erhalten die Planetenräder jeweils zwei entgegengesetzte konische Verzahnungen.

Erfindungsgemäß können gemäß Anspruch 21 die konischen Verzahnungen der Planetenräder abgestuft, insbesondere deutlich abgestuft, gestaltet werden.

Durch diese Maßnahme können die Wolfrom-Übersetzung und damit die internen Zahnwälzleistungen, das Geräusch, die Reibmomente, die Erwärmung und das Massenträgheitsmoment ebenfalls wirksam reduziert werden. Dies wird durch die erfindungsgemäße Anhebung der Vorübersetzung möglich.

Eine einfache Montage wird durch die in Anspruch 22 genannte zweckmäßige Ausgestaltung erreicht.

Durch die in Anspruch 23 genannten Merkmale wird durch eine Integration der Lagerlaufbahnen in die Hohlräder deutlich Bauraum eingespart, so daß mehr Raum verfügbar ist, um bei räumlicher Unterbringung aller Räder innerhalb eines engen Bauraums eine hohe Übersetzung zu realisieren.

Nachfolgend sind Ausführungsbeispiele der Erfindung anhand der Zeichnung prinzipmäßig beschrieben.
Es zeigt:
- Fig. 1: eine Prinzipdarstellung der Verzahnungen des erfindungsgemäßen Planetengetriebes in Stirnansicht;
- Fig. 2: einen Schnitt nach der Linie II-II bis VI-VI der Fig. 1 mit zylindrisch durchgehenden Planetenrädern und zylindrischen Hohlrädern;
- Fig. 3: ein Planetengetriebe mit zylindrisch abgestuften Planetenrädern und konischen Hohlrädern in einem Schnitt entsprechend dem von Fig. 2;
- Fig. 4: ein Planetengetriebe mit doppelkonischen Planetenrädern in einem Schnitt entsprechend dem von Fig. 2;
- Fig. 5: ein Planetengetriebe mit zylindrisch abgestuften Planetenräder und zylindrischen Hohlrädern in einem Schnitt entsprechend dem von Fig. 2 und
- Fig. 6: ein Planetengetriebe mit zylindrisch, durchgehenden Planetenrädern und konischen Hohlrädern in einem Schnitt entsprechend dem von Fig. 2.

Da Planetengetriebe dieser Art grundsätzlich bekannt sind, wird nachfolgend nur kurz auf deren in Verbindung mit der Erfindung wesentlichen Teile näher eingegangen.

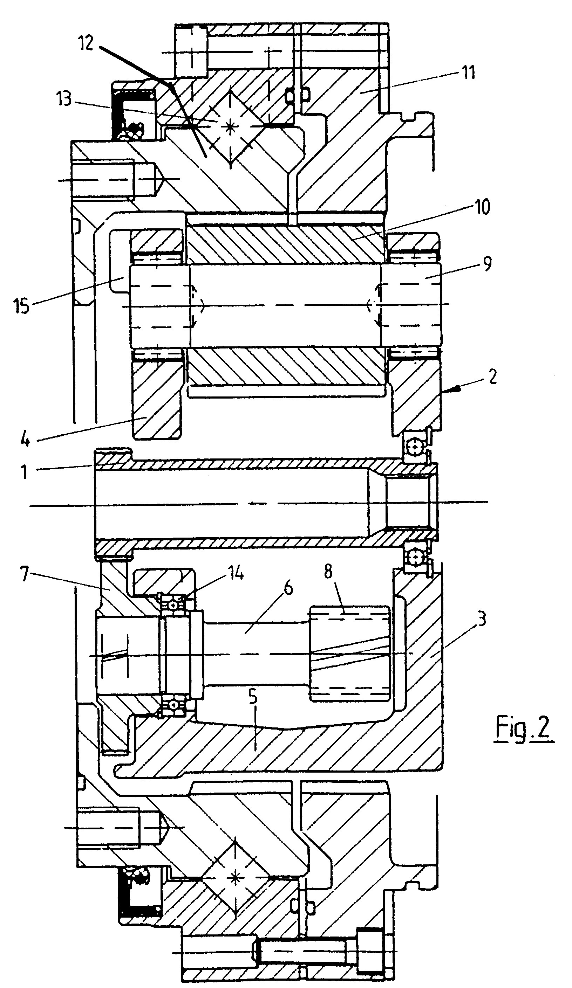

Das Planetengetriebe weist eingangsseitig ein zentrales Sonnenrad 1 auf, das in einem Planetenträger 2 drehbar gelagert ist. Der Planetenträger 2 weist zwei Seitenplatten 3 und 4 auf, die durch Zwischenstege 5 miteinander verbunden sind. In der Seitenwand 4 des Planetenträgers 2 sind fliegend zwei Zwischenwellen 6 gelagert. Jede Zwischenwelle 6 weist zwei Verzahnungen auf, nämlich eine größere Verzahnung 7 und eine kleinere Verzahnung 8. Die größere Verzahnung 7, die als Zahnrad ausgebildet sein kann, welches auf die Zwischenwelle 6 drehfest gesetzt ist, steht in Zahneingriff mit dem Sonnenrad 1. Wie weiterhin aus den Fig. 2 bis 6 ersichtlich ist, liegen das Sonnenrad 1 und die größere Verzahnung 7 außerhalb der beiden Seitenplatten 3 und 4 bzw. auf der von der Seitenplatte 3 abgewandten Außenseite der Seitenplatte 4. Die kleinere Verzahnung 8 kann entweder einstückig mit der Zwischenwelle 6 oder als separates und drehfest mit der Zwischenwelle 6 verbundenes Zahnrad ausgebildet sein.

Über Wellen 9 sind insgesamt vier Planetenräder 10 über Nadellager in den Seitenplatten 3 und 4 des Planetenträgers 2 gelagert.

Mit den Planetenrädern 10 stehen ein festes Hohlrad 11 und ein rotierendes Hohlrad 12, das die Abtriebsseite darstellt, in Zahneingriff.

Zwischen dem feststehenden Hohlrad 11 und dem die Getriebeausgangswelle bildenden drehbaren Hohlrad 12 ist ein nicht näher dargestelltes Hauptlager 13 angeordnet, dessen Wälzkörper-Laufbahnen direkt in die beiden Hohlräder eingearbeitet sind.

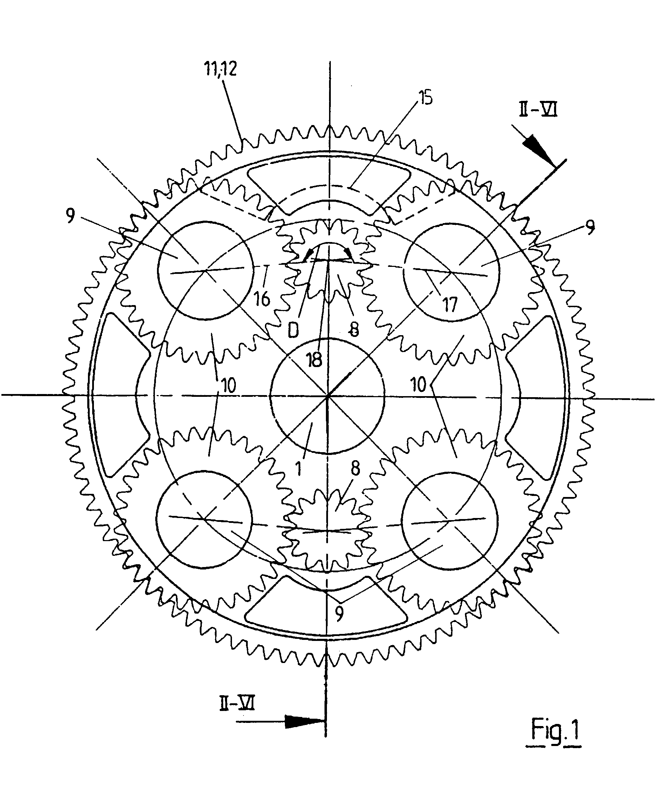

Zur Verstärkung der Seitenplatte 4 des Planetenträgers 2, in der die Zwischenwellen 6 mit ihren Lagern 14 aufgenommen sind, ist diese im Bereich der Aufnahmebohrungen für die Lager 14 durch jeweils eine Rippe bzw. einen Steg 15 verstärkt (siehe gestrichelte Darstellung in der Fig. 1 oben und den Fig. 2 bis 6).

Aus der Fig. 1 ist weiterhin auch ersichtlich, daß die Verbindungslinien 16 und 17 der Mittelpunkte der Achsen zweier mit der kleineren Verzahnung 8 der dazwischenliegenden Zwischenwelle 6 gemeinsam kämmender Planetenräder 10 mit dem Mittelpunkt der Achse 18 der dazugehörigen Zwischenwelle 6, im achssenkrechten Schnitt gesehen, einen Winkel D zwischen 180° und 195° einschließen.

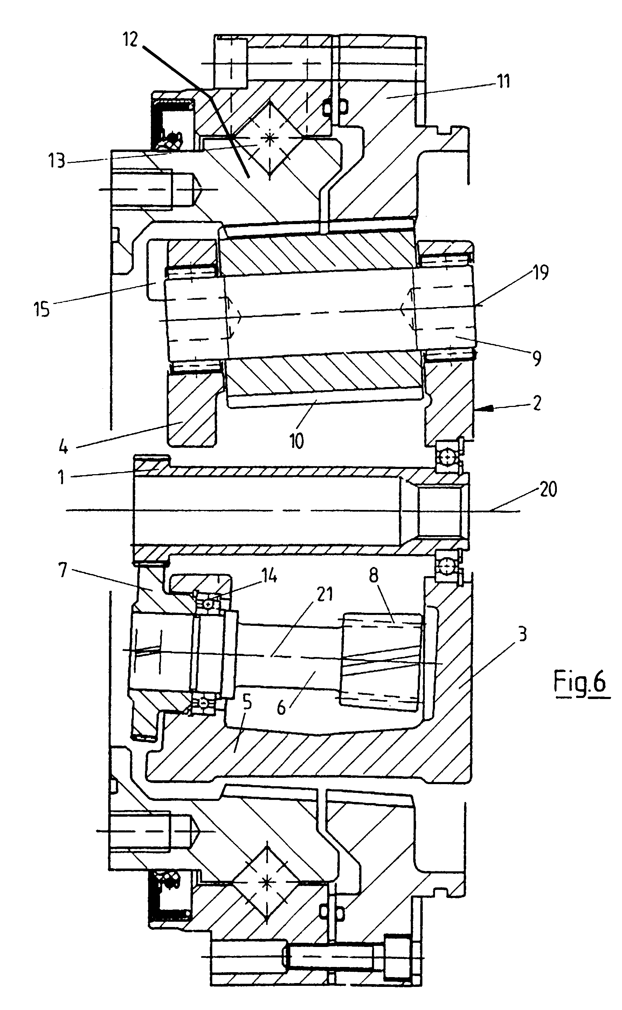

Die in den Fig. 2 und 6 dargestellten Ausführungsbeispiele sind grundsätzlich von gleicher Bauart, weshalb die Bezugszeichen beibehalten worden sind. Sie unterscheiden sich lediglich bezüglich der Ausgestaltung und Lage der Planetenräder, Hohlräder und der Zwischenwellen mit ihren Verzahnungen.

So ist in der Fig. 2 ein Planetengetriebe mit zylindrisch durchgehenden Planetenrädern 10 und zylindrischen Hohlrädern dargestellt.

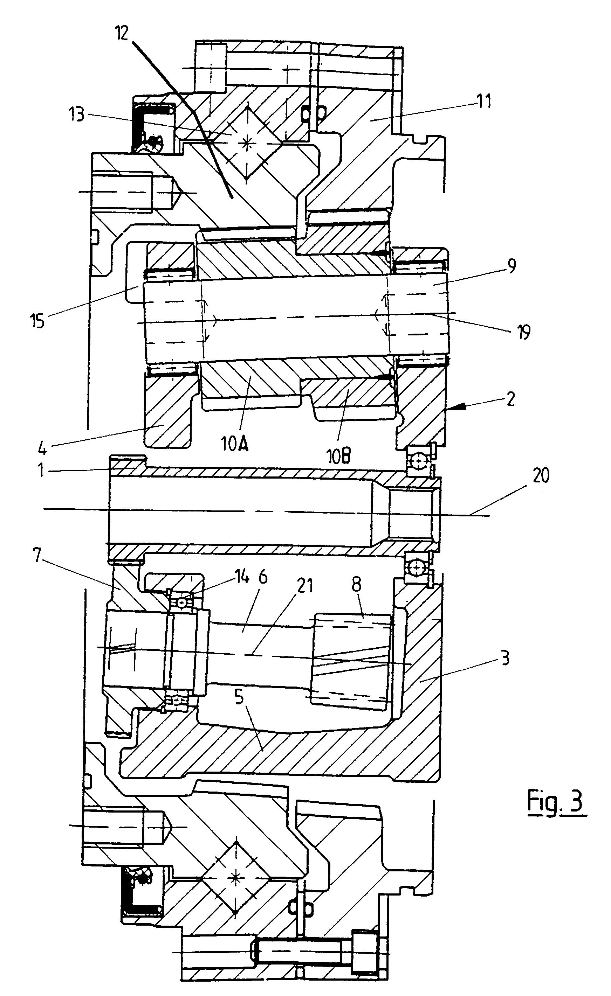

Die Fig. 3 zeigt ein Planetengetriebe mit zwei auf jeder Welle 9 angeordneten, zylindrischen abgestuften Planetenräderverzahnungen 10A und 10B und konischen Hohlrädern 11 und 12. Wie ersichtlich, sind dabei die Achsen 19 der Wellen 9 gegen die Hauptachse 20 des Planetengetriebes leicht schräggestellt. Der Winkel der Schräge kann dabei ca. 3° betragen und verläuft von der Seitenplatte 4 in Richtung zur Seitenplatte 3 aus nach außen.

In ähnlicher Weise sind die Längsachsen 21 der Zwischenwellen 6 ebenfalls gegen die Hauptachse 20 des Planetengetriebes schräggestellt. Der Winkel der Schrägstellung kann ca. 2° - 2,5° betragen und verläuft ebenfalls von der Seitenplatte 3 aus in Richtung zur Seitenplatte 4 aus nach außen.

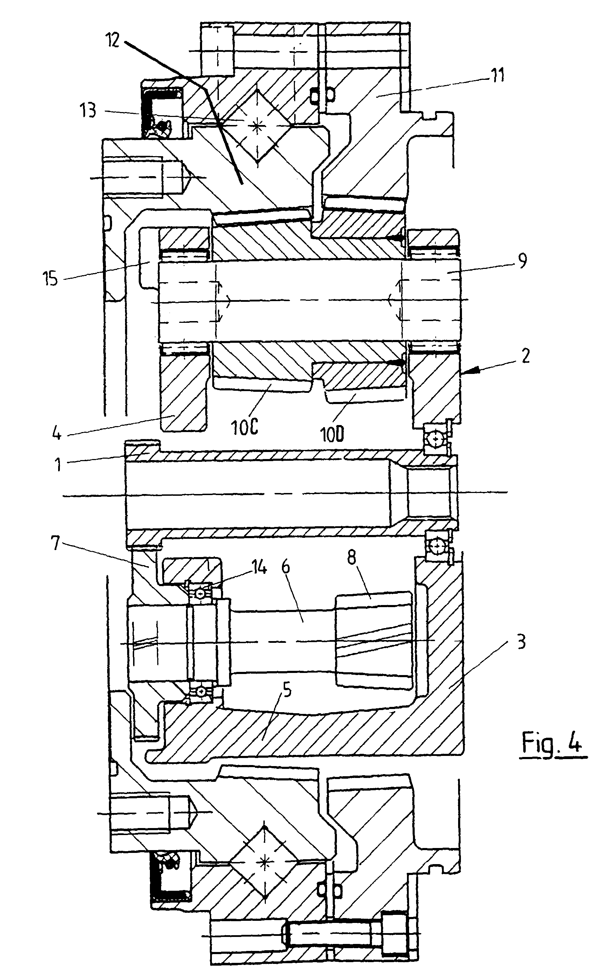

Die Fig. 4 zeigt ein Planetengetriebe mit doppelkonischen Planetenräderverzahnungen 10C und 10D, wobei die Wellen 9 und die Zwischenwellen 6 achsparallel zur Hauptachse 20 des Planetengetriebes liegen. Die Verzahnungen der beiden Hohlräder 11 und 12 sind dabei selbstverständlich an die doppelkonisch geformten Planetenräderverzahnungen 10C und 10D angepaßt.

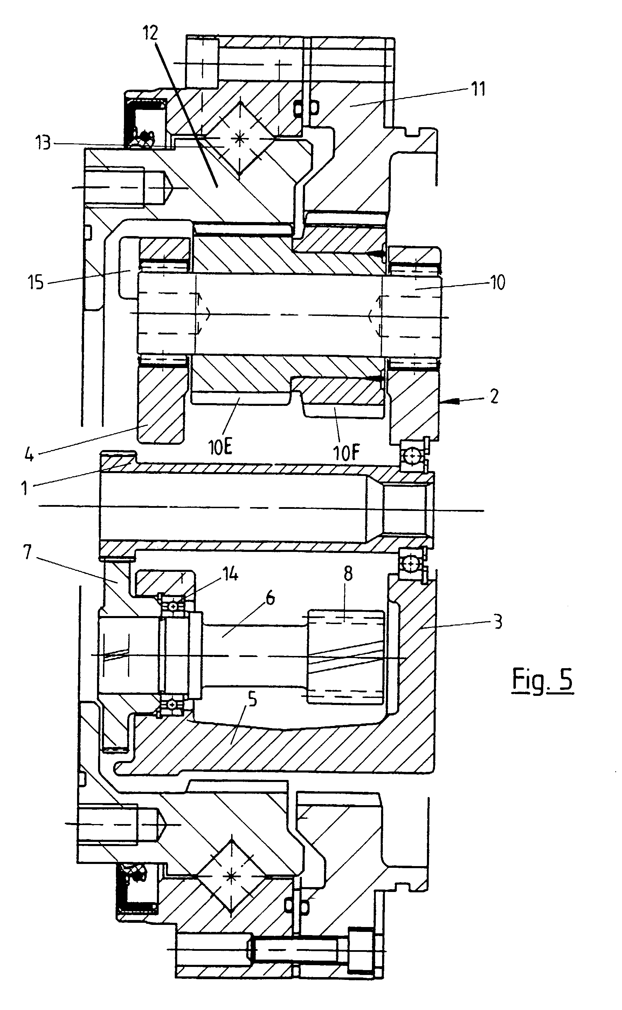

In der Fig. 5 ist ein Planetengetriebe mit jeweils zwei zylindrisch abgestuften Planetenräderverzahnungen 10E und 10F und mit zylindrischen Hohlrädern 11 und 12 sowie mit zylindrischen kleineren Zahnrädern 8 auf den Zwischenwellen 6 dargestellt.

Die Fig. 6 zeigt ein Planetengetriebe mit zylindrisch durchgehenden Planetenrädern 10, wie es auch die Ausgestaltung nach der Fig. 2 zeigt. In gleicher Weise, wie bei dem Ausführungsbeispiel nach der Fig. 3, sind die Hohlräder 11 und 12 konisch und die Längsachsen 19 der vier Wellen 9 sowie die Längsachsen 21 der beiden Zwischenwellen 6 sind zur Hauptachse 20 des Planetengetriebes geneigt.

Die kleineren Verzahnungen 8 der Zwischenwellen 6 können mit Verzahnungsbereichen der Planetenräder 10 kämmen, die mit dem Hohlrad 11, das von den größeren Verzahnungen 7 der Zwischenwellen 6 weiter entfernt liegt, in Eingriff stehen. Es ist jedoch auch die umgekehrte Anordnung möglich, d. h. daß die kleineren Verzahnungen 8 der Zwischenwellen 6 mit Verzahnungsbereichen der Planetenräder 10 kämmen, die mit dem Hohlrad 12, das zu den größeren Verzahnungen 7 der Zwischenwellen 6 näherliegt, in Eingriff stehen.

Wie ersichtlich, sind die kleineren Verzahnungen 8 der Zwischenwellen 6 und auch die Verzahnung des Sonnenrades 1 jeweils fliegend in den Zahneingriffen der mit innen jeweils kämmenden Zahnrädern gelagert.

Die größeren Verzahnungen 7 der Zwischenwellen 6 können in Form von separaten Stirnrädern ausgeführt sein, die mittels zahnstellungsgenauen Formschlußverzahnungen oder durch Schrumpfverbindungen mit den Zwischenwellen 6 drehfest verbunden sind. Wenigstens an den beiden Hohlrädern 11 und 12 und an den Planetenrädern 10 sollten die Verzahnungen, ebenso wie die Verzahnungen der Zwischenwellen 6, die mit den Planetenrädern 10 kämmen, schrägverzahnt, d. h. mit Evolventen-Schrägverzahnung bzw. Evolventen-Schraubenflächen versehen sein.

Die Schrägungswinkel der Verzahnungen an den Planetenrädern 10 sollten wenigstens annähernd gleiche Steigungshöhen der Flankenlinien aufweisen. Ebenso sollte der Richtungssinn der beiden Schrägungswinkel gleich sein.

Das zentrale Sonnenrad 1 und die hiermit kämmenden Verzahnungen 7 der Zwischenwellen 6 können ebenfalls schrägverzahnt sein, wobei die Schrägungswinkel der Verzahnungen 7 an den Zwischenwellen 6 wenigstens annähernd gleiche Steigungshöhen der Flankenlinien aufweisen. Der Richtungssinn beider Schrägungswinkel sollte ebenfalls gleich sein.

Bei Schrägstellungen der Längsachsen 19 der Wellen 9 und der Längsachsen 21 der Zwischenwellen 6 gegenüber der Hauptachse 20 sollten die Schrägstellungen so gewählt sein, daß sich die schräggestellten Achsen mit der Hauptachse 20 des Getriebes wenigstens annähernd in einem gleichen Punkt schneiden.

Bei Ausbildung der Planetenräder mit zylindrisch abgestuften Verzahnungen 10A, 10B oder 10E, 10F (Fig. 3 und 5) sollten jeweils gleiche Zähnezahlen vorgesehen sein.

Wie aus der Fig. 4 ersichtlich ist, können die beiden Hohlräder 11 und 12 zur Hauptachse des Getriebes geneigt sein, wobei die Neigungswinkel der beiden Hohlräder 11 und 12 und der damit jeweils kämmenden Verzahnungen 10C und 10D der Planetenräder zueinander entgegengesetzt verlaufen.

Die beiden entgegengesetzt gerichteten konischen Verzahnungen 10C und 10D der Planetenräder sind dabei im mittleren Durchmesser deutlich abgestuft gestaltet.

Ähnliches gilt auch bei einer Ausgestaltung der Planetenräder mit zylindrisch abgestuften Verzahnungen 10A, 10B oder 10E, 10F, wie es z. B. in den Fig. 3 und 5 dargestellt ist, wobei die Abstufungen ebenfalls deutlich sein sollen.

Bei einer Ausgestaltung der Planetenräder mit im wesentlichen zylindrisch abgestuften Verzahnungen sollten diese untereinander derart ausgeglichen sein, daß sie eine konstant durchgehende, zylindrische Verzahnung bilden.

Weiterhin kann vorgesehen sein, daß von den größeren Verzahnungen 7 der Zwischenwellen 6 jeweils eine Verzahnung eine feste, beliebige Stellungszuordnung zu der kleineren Verzahnung der gleichen Zwischenwelle 6 aufweist, während die andere bzw. die anderen Verzahnungen der sonstigen Zwischenwelle bzw. Zwischenwellen 6 über eine verdrehbar montierbare Flanschverbindung einstellbar gestaltet ist bzw. sind, bei der bzw. bei denen durch geringfügig größere Schrauben-Durchgangslöcher ein begrenztes Verdrehspiel gegeben ist und die Anzahl der Schraubenlöcher mit der Zähnezahl der einzustellenden Verzahnung nicht ganzzahlig teilbar gewählt ist (nicht dargestellt).

### Bezugszeichen

- 1: Sonnenrad
- 2: Planetenträger
- 3: Seitenplatten
- 4: Seitenplatten
- 5: Zwischenstege
- 6: Zwischenwelle
- 7: größere Verzahnung
- 8: kleinere Verzahnung
- 9: Wellen
- 10: Planetenräder
- 10A: Planetenräderverzahnungen
- 10B: Planetenräderverzahnungen
- 10C: Planetenräderverzahnungen
- 10D: Planetenräderverzahnungen
- 10E: Planetenräderverzahnungen
- 10F: Planetenräderverzahnungen
- 11: Hohlrad
- 12: Hohlrad
- 13: Hauptlager
- 14: Lager
- 15: Steg
- 16: Verbindungslinien
- 17: Verbindungslinien
- 18: Achse
- 19: Achsen
- 20: Hauptachse
- 21: Längsachsen

## Patentansprüche

1. Planetengetriebe mit zwei axial nebeneinanderliegenden Hohlrädern, mit mehreren Planetenrädern, die in einem Planetenträger drehbar gelagert sind, und mit einem zentralen Sonnenrad, dadurch **gekennzeichnet**, daß jeweils zwischen zwei Planetenrädern (10) eine Zwischenwelle (6) angeordnet ist, die jeweils zwei Verzahnungen (7, 8) aufweist, wobei die kleinere Verzahnung (8) zum gleichzeitigen Eingriff mit zwei benachbart liegenden Planetenräder (10), zwischen denen die jeweilige Zwischenwelle (6) angeordnet ist, vorgesehen ist und die zweite, gegenüber der ersten im Teilkreis größere Verzahnung (7) mit dem zentralen Sonnenrad (1) in Eingriff steht.

2. Planetengetriebe nach Anspruch 1, dadurch **gekennzeichnet**, daß die Verbindungslinien (16, 17) der Mittelpunkte der Achsen zweier mit der kleineren Verzahnung (8) der dazwischenliegenden Zwischenwelle (6) gemeinsam kämmenden Planetenräder (10) mit dem Mittelpunkt (18) der Achse der dazugehörigen Zwischenwelle (6), im achssenkrechten Schnitt gesehen, einen Winkel (D) zwischen 180° und 195° einschließen.

3. Planetengetriebe nach Anspruch 1 oder 2, dadurch **gekennzeichnet**, daß bei einem Planetenträger (2), der zwei durch Zwischenstege (5) miteinander verbundene Seitenplatten (3, 4) aufweist, die größeren, mit dem Sonnenrad (1) in Eingriff stehenden Verzahnungen (7) der Zwischenwellen (6) in Axialebenen außerhalb der Seitenplatten (3, 4) des Planetenträgers (2) angeordnet sind.

4. Planetengetriebe nach einem der Ansprüche 1 bis 3, dadurch **gekennzeichnet**, daß die kleineren, ersten Verzahnungen (8) der Zwischenwellen (6) mit Verzahnungsbereichen der Planetenräder (10) kämmen, die mit dem Hohlrad (11), das von den zweiten größeren Verzahnungen (7) der Zwischenwellen (6) weiter entfernt liegt, in Eingriff stehen.

5. Planetengetriebe nach einem der Ansprüche 1 bis 3, dadurch **gekennzeichnet**, daß die kleineren, ersten Verzahnungen (8) der Zwischenwellen (6) mit Verzahnungsbereichen der Planetenräder (10) kämmen, die mit dem Hohlrad (12), das zu den zweiten größeren Verzahnungen (7) der Zwischenwellen (6) näher liegt, in Eingriff stehen.

6. Planetengetriebe nach einem der Ansprüche 1 bis 5, dadurch **gekennzeichnet**, daß die jeweils kleineren Verzahnungen (8) der Zwischenwellen (6) und/oder die Verzahnung des zentralen Sonnenrades (1) jeweils fliegend in den Zahneingriffen der mit ihnen kämmenden Zahnräder gelagert sind.

7. Planetengetriebe nach einem der Ansprüche 3 bis 6, dadurch **gekennzeichnet**, daß die Seitenplatte (4) des Planetenträgers (2), die die Zwischenwellen (6) führenden Lager (14) aufnimmt, im Bereich der Aufnahmebohrungen für die Lager (14) jeweils durch eine Rippe, einen Steg (15) oder dergleichen verstärkt ist.

8. Planetengetriebe nach einem der Ansprüche 1 bis 7, dadurch **gekennzeichnet**, daß die jeweils größeren Verzahnungen (7) der Zwischenwellen (6) in Form von getrennten Stirnrädern ausgeführt sind, die mittels zahnstellungsgenauen Formschlußverzahnungen oder durch Schrumpfverbindungen mit den Zwischenwellen (6) drehfest verbunden sind.

9. Planetengetriebe nach einem der Ansprüche 1 bis 8, dadurch **gekennzeichnet**, daß die beiden Hohlräder (11, 12) und die kleineren Verzahnungen (8) der Zwischenwelle (6) konisch ausgebildet sind.

10. Planetengetriebe nach einem der Ansprüche 1 bis 9, dadurch **gekennzeichnet**, daß wenigstens beide Hohlräder (11, 12) und an den Planetenrädern (10) jeweils beide Verzahnungen und an den Zwischenwellen (6) die mit den Planetenrädern (10) kämmenden Verzahnungen (8) schrägverzahnt sind.

11. Planetengetriebe nach Anspruch 10, dadurch **gekennzeichnet**, daß die Schrägungswinkel der Verzahnungen an den Planetenrädern (10) wenigstens annähernd gleiche Steigungshöhen der Flankenlinien aufweisen, und daß der Richtungssinn der beiden Schrägungswinkel gleich ist.

12. Planetengetriebe nach Anspruch 10 oder 11, dadurch **gekennzeichnet**, daß das zentrale Sonnenrad (1) und die hiermit kämmenden zweiten Verzahnungen (7) der Zwischenwellen (6) ebenfalls schrägverzahnt sind, wobei die Schrägungswinkel der ersten und zweiten Verzahnungen (7 bzw. 8) an den Zwischenwellen (6) wenigstens annähernd gleiche Steigungshöhen der Flankenlinien aufweisen, und daß der Richtungssinn beider Schrägungswinkel gleich ist.

13. Planetengetriebe nach einem der Ansprüche 1 bis 12, dadurch **gekennzeichnet**, daß das zentrale Sonnenrad (1) zylindrisch ausgebildet ist.

14. Planetengetriebe nach einem der Ansprüche 1 bis 13, dadurch **gekennzeichnet**, daß die mit dem zentralen Sonnenrad (1) kämmenden zweiten Verzahnungen (7) der Zwischenwellen (6) zylindrisch ausgebildet sind.

15. Planetengetriebe nach einem der Ansprüche 1 bis 14, dadurch **gekennzeichnet**, daß der Unterschied in der Zähnezahl der beiden Hohlräder (11, 12) doppelt oder mehrfach so hoch gewählt ist, als die Anzahl der Planetenräder (10).

16. Planetengetriebe nach einem der Ansprüche 1 bis 15, dadurch **gekennzeichnet**, daß die Planetenräder (10) zwei im wesentlichen zylindrische Verzahnungen (10A, 10B) aufweisen und auf einer um einen Winkel zur Hauptachse (20) des Getriebes radial geneigten Drehachse (19) gelagert sind.

17. Planetengetriebe nach Anspruch 16, dadurch **gekennzeichnet**, daß die Zwischenwellen (6) auf einer um einen Winkel zur Hauptachse (20) des Getriebes radial geneigten Drehachse (21) gelagert sind, wobei sich die Planetenradachsen (19), ebenso wie die Achsen (21) der Zwischenwellen (6), mit der Hauptachse (20) des Getriebes wenigstens annähernd in einem gleichen Punkt schneiden.

18. Planetengetriebe nach Anspruch 16, dadurch **gekennzeichnet**, daß die beiden im wesentlichen zylindrischen Verzahnungen (10A, 10B und 10E, 10F) der Planetenräder (10) abgestuft gestaltet sind.

19. Planetengetriebe nach Anspruch 18, dadurch **gekennzeichnet**, daß die zylindrisch abgestuften Verzahnungen (10A, 10B und 10E, 10F) der Planetenräder (10) jeweils gleiche Zähnezahlen aufweisen.

20. Planetengetriebe nach einem der Ansprüche 1 bis 17, dadurch **gekennzeichnet**, daß die beiden Hohlräder (11, 12) zur Hauptachse des Getriebes geneigt sind, wobei die Neigungswinkel der beiden Hohlräder (11, 12) und der damit jeweils kämmenden Verzahnungen (10C, 10D) der Planetenräder (10) zueinander entgegengesetzt verlaufen, und daß die Planetenräder (10) sowie die Zwischenwellen (6) jeweils auf einer zur Hauptachse (20) des Getriebes im wesentlichen parallelen Drehachse gelagert sind.

21. Planetengetriebe nach Anspruch 20, dadurch **gekennzeichnet**, daß die beiden entgegengesetzt gerichteten konischen Verzahnungen (10C, 10D) der Planetenräder (10) im mittleren Durchmesser abgestuft gestaltet sind.

22. Planetengetriebe nach Anspruch 21, dadurch **gekennzeichnet**, daß die entgegengesetzt gerichteten konischen Verzahnungen (10C, 10D) der Planetenräder (10) jeweils gleiche Zähnezahlen aufweisen.

23. Planetengetriebe nach einem Ansprüche 1 bis 22, dadurch **gekennzeichnet**, daß das eine Hohlrad (11) feststehend und das andere Hohlrad (12) drehbar angeordnet ist und daß zwischen dem feststehenden Hohlrad (11) und dem eine Getriebeausgangswelle bildenden drehbaren Hohlrad (12) ein Hauptlager (13) angeordnet ist, wobei die Wälzkörper-Laufbahnen des Hauptlagers (13) direkt in die beiden Hohlräder (11 bzw. 12) eingearbeitet sind.

## Claims

1. Planetary gear having two axially adjacent ring gears, having a plurality of planet wheels rotatably supported in a planet carrier, and having a central sun wheel, characterized in that disposed between each two planet wheels (10) is an intermediate shaft (6), which comprises in each case two gearings (7, 8), wherein the smaller gearing (8) is provided for meshing simultaneously with two adjacent-lying planet wheels (10), between which the respective intermediate shaft (6) is disposed, and the second gearing (7), the reference circle of which is larger than that of the first, is in mesh with the central sun wheel (1).

2. Planetary gear according to claim 1, characterized in that the lines (16, 17) connecting the centres of the axes of two planet wheels (10), which jointly mesh with the smaller gearing (8) of the interlying intermediate shaft (6), to the centre (18) of the axis of the associated intermediate shaft (6), viewed in axially vertical section, form an angle (D) of between 180° and 195°.

3. Planetary gear according to claim 1 or 2,
characterized in that, given a planet carrier (2) which comprises two side plates (3, 4) connected to one another by intermediate webs (5), the larger gearings (7) of the intermediate shafts (6) which are in mesh with the sun wheel (1) are disposed in axial planes outside of the side plates (3, 4) of the planet carrier (2).

4. Planetary gear according to one of claims 1 to 3, characterized in that the smaller, first gearings (8) of the intermediate shafts (6) mesh with gearing regions of the planet wheels (10) which are in mesh with the ring gear (11) lying further remote from the second larger gearings (7) of the intermediate shafts (6).

5. Planetary gear according to one of claims 1 to 3, characterized in that the smaller, first gearings (8) of the intermediate shafts (6) mesh with gearing regions of the planet wheels (10) which are in mesh with the ring gear (12) lying closer to the second larger gearings (7) of the intermediate shafts (6).

6. Planetary gear according to one of claims 1 to 5, characterized in that the, in each case, smaller gearings (8) of the intermediate shafts (6) and/or the gearing of the central sun wheel (1) are in each case mounted overhung in the meshings of the gear wheels meshing with them.

7. Planetary gear according to one of claims 3 to 6, characterized in that the side plate (4) of the planet carrier (2) accommodating bearings (14) for guiding the intermediate shaft (6) is strengthened in the region of the location holes for the bearings (14) in each case by means of a rib, a web (15) or the like.

8. Planetary gear according to one of claims 1 to 7, characterized in that the, in each case, larger gearings (7) of the intermediate shafts (6) take the form of separate spur gears, which are non-rotatably connected to the intermediate shafts (6) by means of tooth-position-precise positive gearings or by means of shrink joints.

9. Planetary gear according to one of claims 1 to 8, characterized in that the two ring gears (11, 12) and the smaller gearings (8) of the intermediate shaft (6) are conical.

10. Planetary gear according to one of claims 1 to 9, characterized in that at least both ring gears (11, 12) and, on the planet wheels (10), in each case both gearings and, on the intermediate shafts (6), the gearings (8) meshing with the planet wheels (10) are helically geared.

11. Planetary gear according to claim 10, characterized in that the helix angles of the gearings on the planet wheels (10) have at least approximately identical leads of the tooth traces, and that the directional sense of the two helix angles is identical.

12. Planetary gear according to claim 10 or 11,
characterized in that the central sun wheel (1) and the second gearings (7) of the intermediate shafts (6) meshing therewith are likewise helically geared, the helix angles of the first and second gearings (7 and 8) of the intermediate shafts (6) having at least approximately identical leads of the tooth traces, and that the directional sense of both helix angles is identical.

13. Planetary gear according to one of claims 1 to 12, characterized in that the central sun wheel (1) is cylindrical.

14. Planetary gear according to one of claims 1 to 13, characterized in that the second gearings (7) of the intermediate shafts (6) meshing with the central sun wheel (1) are cylindrical.

15. Planetary gear according to one of claims 1 to 14, characterized in that the difference in the tooth number of the two ring gears (11, 12) is selected so as to be two or more times as high as the number of planet wheels (10).

16. Planetary gear according to one of claims 1 to 15, characterized in that the planet wheels (10) have two substantially cylindrical gearings (10A, 10B) and are supported on an axis of rotation (19), which is inclined radially at an angle relative to the main axis (20) of the gear.

17. Planetary gear according to claim 16, characterized in that the intermediate shafts (6) are supported on an axis of rotation (21), which is inclined radially at an angle relative to the main axis (20) of the gear, the planet wheel axes (19), in a similar manner to the axes (21) of the intermediate shafts (6), cutting the main axis (20) of the gear at least approximately at an identical point.

18. Planetary gear according to claim 16, characterized in that the two substantially cylindrical gearings (10A, 10B and 10E, 10F) of the planet wheels (10) are stepped.

19. Planetary gearing according to claim 18, characterized in that the cylindrically stepped gearings (10A, 10B and 10E, 10F) of the planet wheels (10) have in each case identical tooth numbers.

20. Planetary gear according to one of claims 1 to 17, characterized in that the two ring gears (11, 12) are inclined relative to the main axis of the gear, the angles of inclination of the two ring gears (11, 12) and of the gearings (10C, 10D) of the planet wheels (10) which mesh in each case therewith extending in opposite directions to one another, and that the planet wheels (10) as well as the intermediate shafts (6) are supported in each case on an axis of rotation which is substantially parallel to the main axis (20) of the gear.

21. Planetary gear according to claim 20, characterized in that the two oppositely directed conical gearings (10C, 10D) of the planet wheels (10) are designed so as to be stepped mid-diameter.

22. Planetary gear according to claim 21, characterized in that the oppositely directed conical gearings (10C, 10D) of the planet wheels (10) have in each case identical tooth numbers.

23. Planetary gear according to one of claims 1 to 22, characterized in that the one ring gear (11) is fixed and the other ring gear (12) is rotatable and that disposed between the fixed ring gear (11) and the rotatable ring gear (12) forming a gear output shaft is a main bearing (13), the rolling-element raceways of the main bearing (13) being worked directly into the two ring gears (11 and 12).

## Revendications

1. Boîte de vitesses planétaire comportant deux couronnes juxtaposées axialement avec plusieurs satellites pivotants, qui sont situés sur un porte-satellites, et une roue planétaire centrale, **caractérisée** en ce que, respectivement entre deux satellites (10), soit monté un arbre intermédiaire (6), qui comporte deux dentures (7, 8), sachant que la plus petite denture (8) doit s'engrener simultanément avec les deux satellites (10) adjacents, entre lesquels se situe l'arbre intermédiaire (6) et sachant que la deuxième (7), comportant par rapport à la première un diamètre primitif plus grand, s'engrène avec la roue planétaire (1) centrale.

2. Boîte de vitesses planétaire d'après la revendication 1,
**caractérisée** en ce que les lignes de jonction (16, 17) des centres des axes des deux satellites (10) étant en prise avec la denture la plus petite (8) de l'arbre intermédiaire interposé (6), forment - vu verticalement à la section de l'axe - avec le centre (18) de l'axe de l'arbre intermédiaire (6) correspondant un angle (D) entre 180° et 195°.

3. Boîte de vitesses planétaire d'après la revendication 1 ou 2,
**caractérisée** en ce que sur un porte-satellites (2), qui comporte deux plaques latérales (3, 4) reliées entre elles par des nervures intermédiaires (5), les dentures les plus grandes (7) des arbres intermédiaires qui engrènent avec la roue planétaire (1) soient disposées axialement à l'extérieur des plaques latérales (3, 4) du porte-satellites (2).

4. Boîte de vitesses planétaire d'après l'une des revendications 1 à 3,
**caractérisée** en ce que les premières dentures les plus petites (8) des arbres intermédiaires s'engrènent avec la partie de denture des satellites (10) qui est en prise avec la couronne (11), laquelle se trouve plus éloignée des deux plus grandes dentures des arbres intermédiaires (6).

5. Boîte de vitesses planétaire d'après l'une des revendications 1 à 3,
**caractérisée** en ce que les premières dentures les plus petites (8) des arbres intermédiaires s'engrènent avec la partie de denture des satellites (10) qui est en prise avec la couronne (12), laquelle se trouve plus près des deux plus grandes dentures (7) des arbres intermédiaires (6).

6. Boîte de vitesses planétaire d'après l'une des revendications 1 à 5,
**caractérisée** en ce que les plus petites dentures (8) des arbres intermédiaires (6) et/ou la denture de la roue planétaire centrale (1) soient logées de manière flottante dans les engrènements des pignons étant en prise avec celles-ci.

7. Boîte de vitesses planétaire d'après l'une des revendications 3 à 6,
**caractérisée** en ce que la plaque latérale (4) du porte-satellites (2), qui supporte les paliers de guidage (14) des arbres intermédiaires (6), soit renforcée dans la partie du perçage de fixation pour les paliers (14) par une moulure, une nervure (15), ou similaire.

8. Boîte de vitesses planétaire d'après l'une des revendications 1 à 7,
**caractérisée** en ce que les plus grandes dentures (7) des arbres intermédiaires (6) soient réalisées en forme de pignons droits séparés, qui sont reliés avec les arbres intermédiaires (6) au moyen de dentures crabotées précises ou par emmanchement.

9. Boîte de vitesses planétaire d'après l'une des revendications 1 à 8,
**caractérisée** en ce que les deux couronnes (11, 12) et les plus petites dentures (8) de l'arbre intermédiaire (6) aient une forme conique.

10. Boîte de vitesses planétaire d'après l'une des revendications 1 à 9,
**caractérisée** en ce que au moins les deux couronnes (11, 12), les deux dentures sur les satellites (10) et les dentures sur les arbres intermédiaires (6) engrenées avec les satellites, aient une forme hélicoïdale.

11. Boîte de vitesses planétaire d'après la revendication 10,
**caractérisée** en ce que l'angle d'hélice des dentures sur les satellites (10) comporte au moins le même pas hélicoïdal de la ligne de flanc et que l'orientation des deux angles soit la même

12. Boîte de vitesses planétaire d'après la revendication 10 ou 11,
**caractérisée** en ce que la roue planétaire centrale (1) et les deuxièmes dentures (7) des arbres intermédiaires (6) engrenantes avec celle-ci aient aussi une forme hélicoïdale, à l'occasion de quoi l'angle d'hélice des premières et deuxièmes dentures (7 ou 8) sur les arbres intermédiaires (6) comporte au moins - à peu près - le même pas hélicoïdal de la ligne de flanc et que l'orientation des deux angles d'hélice soit la même.

13. Boîte de vitesses planétaire d'après l'une des revendications 1 à 12,
**caractérisée** en ce que la roue planétaire centrale (1), ait une forme cylindrique.

14. Boîte de vitesses planétaire d'après l'une des revendications 1 à 13,
**caractérisée** en ce que les deuxièmes dentures (7) les arbres intermédiaires (6) qui engrènent avec la roue planétaire centrale (1) aient une forme cylindrique.

15. Boîte de vitesses planétaire d'après l'une des revendications 1 à 14,
**caractérisée** en ce que la différence dans le nombre de dents des deux couronnes (11, 12) soit, doublée ou multipliée, autant que choisi, que le nombre de satellites (10).

16. Boîte de vitesses planétaire d'après l'une des revendications 1 à 15,
**caractérisée** en ce que les satellites (10) comportent deux dentures essentiellement cylindriques (10A, 10B) et qu'ils soient logés autour d'un axe rotatif (19) incliné radialement, dont l'inclinaison est définie par un angle déterminé, par rapport à l'axe principal (20) de la BV.

17. Boîte de vitesses planétaire d'après la revendication 16,
**caractérisée** en ce que les arbres intermédiaires (6) soient disposés autour d'un axe rotatif (21) incliné radialement, dont l'inclinaison est définie par un angle déterminé par rapport à l'axe principal (20) de la BV, à l'occasion de quoi, au moins, les axes des satellites (19), ainsi que les axes (21) des arbres intermédiaires (6) se croisent avec l'axe principal (20) de la BV - à peu près - au même point.

18. Boîte de vitesses planétaire d'après la revendication 16,
**caractérisée** en ce que les deux dentures (10A, 10B et 10E, 10F) essentiellement cylindriques des satellites (10) soient étagées.

19. Boîte de vitesses planétaire d'après la revendication 18,
**caractérisée** en ce que les dentures cylindriques étagées (10A, 10B et 10E, 10F) des satellites (10) comportent respectivement le même nombre de dents.

20. Boîte de vitesses planétaire d'après l'une des revendications 1 à 17,
**caractérisée** en ce que les deux couronnes (11, 12) soient penchées vers l'axe principal de la BV, à l'occasion de quoi l'angle d'inclinaison des deux couronnes (11, 12) et des dentures (10C, 10D) des satellites (10) en prise avec celles-ci soient opposés l'un à l'autre et que les satellites (10) ainsi que les arbres intermédiaires (6) soient logés respectivement sur un axe de rotation essentiellement parallèle à l'axe principal (20) de la BV.

21. Boîte de vitesses planétaire d'après la revendication 20,
**caractérisée** en ce que les deux dentures (10C, 10D) coniques opposées des satellites (10) soient étagées au niveau du diamètre moyen.

22. Boîte de vitesses planétaire d'après la revendication 21,
**caractérisée** en ce que les dentures (10C, 10D) coniques opposées des satellites comportent respectivement le même nombre de dents.

23. Boîte de vitesses planétaire d'après l'une des revendications 1 à 22,
**caractérisée** en ce que une couronne (11) soit logée de façon immobile et que l'autre couronne (12) soit logée de façon rotative et que, entre la couronne (11) fixe et la couronne (12) rotative formant un arbre de sortie de BV, soit monté un roulement principal (13), à l'occasion de quoi les portées des corps de roulement du roulement principal (13) soient réalisées directement dans les deux couronnes (11 ou 12).
